# EUROPÄISCHE PATENTANMELDUNG

(11) **EP 3 979 446 A1**
(43) Veröffentlichungstag der Anmeldung: **06.04.2022**
(21) Anmeldenummer: 21209390.0
(22) Anmeldetag: 05.03.2019
(51) Int. Cl.: H02G 3/08, H02G 3/12

(54) **INSTALLATIONSDOSE**

(30) Priorität: 14.03.2018 DE 102018105945
(62) Teilanmeldung aus: 19160771.2
(71) Anmelder: Kaiser GmbH & Co. KG, 58579 Schalksmühle (DE)
(72) Erfinder: Viola, Marc, 58339 Breckerfeld (DE); Rüther, Andreas, 58511 Lüdenscheid (DE)
(74) Vertreter: Rentsch Partner AG

(57) **Zusammenfassung**

Installationsdose (1) für elektrotechnische Zwecke umfassend einen Dosenboden (2) und eine daran anschliessende Dosenwand (3), welche einen Installationsraum (5) bilden. Dem Dosenboden (2) gegenüberliegend und von der Dosenwand (3) umgeben befindet sich eine Installationsöffnung (4). Die Installationsdose (1) weist weiterhin mindestens eine Einführöffnung (6) auf, welche von einem heraustrennbaren Wandbereich (7) verschlossen ist. Der Wandbereich (7) ist gegenüber einem Rand (8) der Einführöffnung (6) zumindest bereichsweise durch einen Spalt (12) getrennt, der mindestens ein Sollbruchelement (13) umfasst. Weiter umfasst der Wandbereich (7) eine innere Sektion (9) und mindestens eine diese zumindest teilweise umgebende äussere Sektion (10). Die mindestens eine äussere Sektion (10) ist zumindest bereichsweise von der inneren Sektion (9) durch einen Spalt (12) getrennt, der mindestens ein Sollbruchelement (14) umfasst.

## Beschreibung

### TECHNISCHES GEBIET

Die Erfindung betrifft eine Installationsdose für elektrotechnische Zwecke, insbesondere zur Aufnahme von elektrischen Teilen wie Schaltern, Steckdosen, Lampen oder ähnliches.

### HINTERGRUND DER ERFINDUNG

Um elektrische Schalter, Steckdosen, Lampen, Apparate, etc. an den dazu vorgesehenen Stellen in einem Gebäude eines Bauwerkes anbringen zu können, werden unter anderem Installationsdosen verwendet. Unter solchen Installationsdosen werden beispielsweise Unterputzdosen, Einlasskästen, Unterputzabzweigdosen, Verteilerdosen und dergleichen verstanden. Die Installationsdosen weisen typischerweise einen zylinder- oder quaderförmigen Körper mit einem Dosenboden und einer daran anschliessenden Dosenwand auf und umfassen einen über eine Installationsöffnung zugänglichen Installationsraum. Umfangsseitig in der Dosenwand und/oder dem Dosenboden, bzw. in einem Übergangsbereich zwischen Dosenboden und Dosenwand weist der Dosenkörper zudem mehrere Einführöffnungen auf, welche in der Regel durch einen Wandbereich zunächst verschlossen sind. Bei Bedarf können die Einführöffnungen mit einem Werkzeug herausgetrennt werden, um ein Elektrorohr, bzw. ein Elektrokabel in den Installationsraum einzuführen. Nachfolgend werden einige Dokumente aus dem Stand der Technik kurz erläutert:
WO9614682A1, publiziert am 17.05.1996 im Namen von G. Putz, offenbart eine Hohlwanddose in dessen Wand und Boden Schlitze vorgesehen sind. Die von diesen begrenzten Bereiche der Wand bzw. des Bodens sind über Sollbruchstellen mit den restlichen Abschnitten der Wand bzw. des Bodens verbunden, so dass in einfacher Weise Einführungsdurchbrüche für Kabel gebildet werden können.
EP2360800B1, publiziert am 26.07.2017 im Namen der Anmelderin, betrifft ein Installationsteil für elektrische Installationen zum Einführen mindestens eines Leerrohres, wobei das Installationsteil mindestens eine Wandung mit mindestens einem durch eine Sollbruchstelle umgrenzten Wandungsbereich aufweist. Durch Heraustrennen des Wandungsbereiches wird ein Einlass für ein Leerrohr gebildet, wobei der Wandungsbereich mindestens eine Eingriffskontur für ein Werkzeug, insbesondere die Klinge eines Schraubendrehers, zum Ausbrechen des Wandungsbereiches aufweist.
US2005072590AA, publiziert am 07.04.2005 in Namen von Thomas and Betts Int LLC, offenbart eine Steckdoseninstallationsdose. An einer Wand der Dose sind kreisförmige innere, mittlere und äußere Nuten angeordnet, welche geschwächte Bereiche zum Entfernen von kleinen, mittleren und großen Vorprägungen bereitstellen.

Die aus dem Stand der Technik bekannten Installationsdosen haben den Nachteil, dass die Einführöffnungen häufig schwer zu öffnen sind, bzw. die sie verschliessenden Wandbereiche unkontrolliert ausbrechen. Daher ist ein präzises Öffnen der gewünschten Einführöffnung oftmals nicht möglich. Ein weiterer Nachteil besteht darin, dass die aus dem Stand der Technik bekannten Dosen entlang der Einführöffnungen häufig scharfe Kanten aufweisen.

### DARSTELLUNG DER ERFINDUNG

Eine Aufgabe der Erfindung besteht darin eine verbesserte Installationsdose für den Trockenbau mit einer präzise heraustrennbaren Einführöffnung bereitzustellen, welche sich zudem für unterschiedliche Rohrdurchmesser eignet.

Eine Installationsdose gemäss der Erfindung umfasst einen Dosenboden und eine daran anschliessende Dosenwand, welche einen Installationsraum für elektrotechnische Zwecke bilden. Zwischen dem Dosenboden und der Dosenwand kann die Installationsdose einen abgerundeten und/oder abgeflachten Übergangsbereich umfassen. Dem Dosenboden gegenüberliegend befindet sich eine Installationsöffnung welche Zugang zum Installationsraum gestattet. Die Installationsdose weist im Bereich des Dosenbodens und/oder der Dosenwand und/oder, wenn vorhanden, dem Übergangsbereich mindestens eine Einführöffnung auf, welche vor der Installation von einem heraustrennbaren Wandbereich verschlossen ist.

Der heraustrennbare Wandbereich ist gegenüber einem Rand der Einführöffnung mit Vorteil zumindest bereichsweise durch einen Spalt getrennt, in welchem mindestens ein Sollbruchelement angeordnet ist. Das Sollbruchelement dient zur Halterung des heraustrennbaren Wandbereiches gegenüber dem Rand der Einführöffnung. Der Spalt kann bei Bedarf durch eine dünne Materialschicht verschlossen sein, so dass die Dose vor dem Öffnen z.B. dicht ist. Die dünne Materialschicht kann Teil des Sollbruchelementes sein.

Der heraustrennbare Wandbereich umfasst in der Regel eine innere Sektion und mindestens eine diese umfangseitig zumindest teilweise umgebende äussere Sektion. In einer bevorzugten Variante ist die äussere Sektion von der inneren Sektion ebenfalls durch einen Spalt getrennt, welcher mindestens ein Sollbruchelement umfasst. Die innere und die äussere Sektion sind so ausgestaltet, bzw. angeordnet, dass abhängig vom Durchmesser eines einzuführenden Rohres, die innere Sektion alleine (kleinere Rohrdurchmesser) oder in Kombination mit der äusseren Sektion (grössere Rohrdurchmesser) heraustrennbar ist. Die Sollbruchelemente sind dabei mit Vorteil so ausgestaltet, dass bei einer Krafteinwirkung auf die innere Sektion die weiter innen liegenden Sollbruchelemente, bzw. das mindestens eine Sollbruchelement eines weiter innen liegenden Spaltes, bevorzugter brechen als die weiter aussenliegenden Sollbruchelemente. Dies kann z.B. durch deren Dimensionierung und/oder Anzahl beeinflusst werden. Die Installationsdose wird mit Vorteil durch Spritzgiessen hergestellt. Dabei ist es von Vorteil, wenn die Sollbruchelemente seitlich versetzt zueinander angeordnet sind, da dadurch ein besserer Materialfluss, bzw. eine bessere Materialverteilung bei der Herstellung erreicht wird. Sich nachteilhaft auswirkende Kaltschweissstellen innerhalb des Materials können dadurch vermieden werden.

Je nach Ausgestaltung kann die äussere Sektion selber aus mehreren (äusseren) Sektionen bestehen. Diese äusseren Sektionen sind ebenfalls durch Spalte voneinander getrennt und über mindestens ein darin angeordnetes Sollbruchelement vor dem Öffnen wirkverbunden. Die Sektionen können unterschiedlich ausgestaltet sein. In einer bevorzugten Variante sind sie konzentrisch zueinander angeordnet. Durch das Heraustrennen einer oder mehrerer Sektionen können Öffnungen in den Installationsraum geschaffen werden, welche sich für unterschiedliche Rohrdurchmesser eignen. Die einzelnen (äusseren) Sektionen können z.B. ringförmig, bzw. sichelförmig aneinander angrenzend ausgestaltet sein. In einer bevorzugten Variante ist die mindestens eine Einführöffnung in einem Übergangsbereich zwischen dem Dosenboden und der Dosenwand angeordnet. Der heraustrennbare Wandbereich, bzw. dessen innere und mindestens eine äussere Sektion können in zwei Raumrichtungen gekrümmt ausgestaltet sein.

Mit Vorteil sind die, mit Bezug auf ein Zentrum der Einführöffnung, in weiter aussenliegenden Spalten angeordneten Sollbruchelemente stärker dimensioniert, bzw. näher beieinander liegend angeordnet, so dass zum Entfernen der weiter innenliegenden Sektionen weniger Kraft aufgewendet werden muss, als bei den weiter aussenliegenden Sektionen. Eine solche Anordnung ist vorteilhaft, da dies das stückweise und kontrollierte Heraustrennen der jeweiligen Sektionen erleichtert. Einerseits wird das ungewollte Heraustrennen einer weiter äusseren Sektion, d.h. das Erzeugen einer möglicherweise zu grossen Öffnung für das einzuführende Kabel oder Elektrorohr, vermieden. Andererseits kann eine erzeugte kleinere Öffnung, welche beispielsweise durch das Heraustrennen der inneren Sektion erzeugt wurde, dahingehend genutzt werden, dass die erzeugte Öffnung als Öffnungshilfe, bzw. Eingriffskontur in den Installationsraum dient: Nach dem Heraustrennen der inneren Sektion, d.h. in einem herausgetrennten Zustand der inneren Sektion, kann in die an der Stelle der inneren Sektion erzeugte Eingriffskontur ein Werkzeug, insbesondere die Klinge eines Schraubendrehers, eingeführt werden. Das eingeführte Werkzeug kann dann folgend dazu genutzt werden, dass die um die innere Sektion herumliegenden äusseren Sektionen und somit der gesamte oder teilweise Wandbereich durch entsprechendes Heraushebeln mit dem Werkzeug einfacher herausgetrennt werden kann.

Ein kontrollierteres Heraustrennen kann weiter unterstützt werden, indem der die innere und/oder die äussere Sektion umgebene Spalt zumindest bereichsweise als ein Durchbruch von einer Doseninnenseite zu einer Dosenaussenseite ausgestaltet ist. Je nach Ausgestaltung dieser Durchbrüche in dem jeweiligen Spalt, kann das darin angeordnete, mindestens eine Sollbruchelement ein den Durchbruch überbrückender Steg bzw. eine entsprechende Dünnstelle sein.

Um das Heraustrennen der inneren Sektion zu erleichtern kann diese bezogen auf eine Aussenseite der Installationsdose versenkt angeordnet sein. Dies ist besonders vorteilhaft, wenn die innere Sektion bezogen auf ihre Fläche verhältnismässig klein im Vergleich zu der mindestens einen äusseren Sektion ausgestaltet ist. Die innere Sektion kann beispielsweise eine Fläche von lediglich A=5-1 5% der Fläche der mindestens einen äusseren Sektion einnehmen.

Wenn die Installationsdose in einem Spritzgussverfahren hergestellt wird und diese Dose ebenfalls Durchbrüche wie oben beschrieben aufweist, ist es vorteilhaft, dass die Durchbrüche sich in eine Entformungsrichtung des Spitzgusswerkzeuges durch die Installationsdose erstrecken. Auf diese Weise werden Hinterschnitte in dem Spritzgussteil vermieden. Weiterhin sind die innere und mindestens eine äussere Sektion mit Vorteil quer zu einer Entformungsrichtung des zur Herstellung der Installationsdose verwendeten Spritzgiesswerkzeuges versetzt zueinander angeordnet. Damit kann erreicht werden, dass das Spritzgiesswerkzeug eine einfachere, zumindest in diesem Bereich Hinterschnitt freie Gestaltung aufweist. Die allfällig vorhandenen Sollbruchelemente können zudem so angeordnet sein, dass sie den Versatz überbrücken und sich ebenfalls in diese Entformungsrichtung erstrecken. Für einen guten Fluss des Kunststoffmaterials während des Spitzgussprozesses ist weiter von Vorteil, wenn die Sollbruchelemente um den jeweiligen Umfang der Spalte verteilt sind und von Spalt zu Spalt versetzt angeordnet sind.

### KURZE BESCHREIBUNG DER FIGUREN

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Variante einer Installationsdose gemäss der Erfindung in einer perspektivischen Ansicht von unten;

- Fig. 2: die erste Variante der Installationsdose gemäss Figur 1 in einer perspektivischen und teilweise geschnittenen Ansicht von unten;
- Fig. 3: Eine zweite Variante einer Installationsdose gemäss der Erfindung in einer perspektiven Ansicht von unten und einem ersten Detail des Wandbereichs
- Fig. 4: Die zweite Variante der Installationsdose gemäss Figur 3 und einem zweiten Detail des Wandbereichs.

### BESCHREIBUNG DER AUSFÜHRUNGSFORMEN

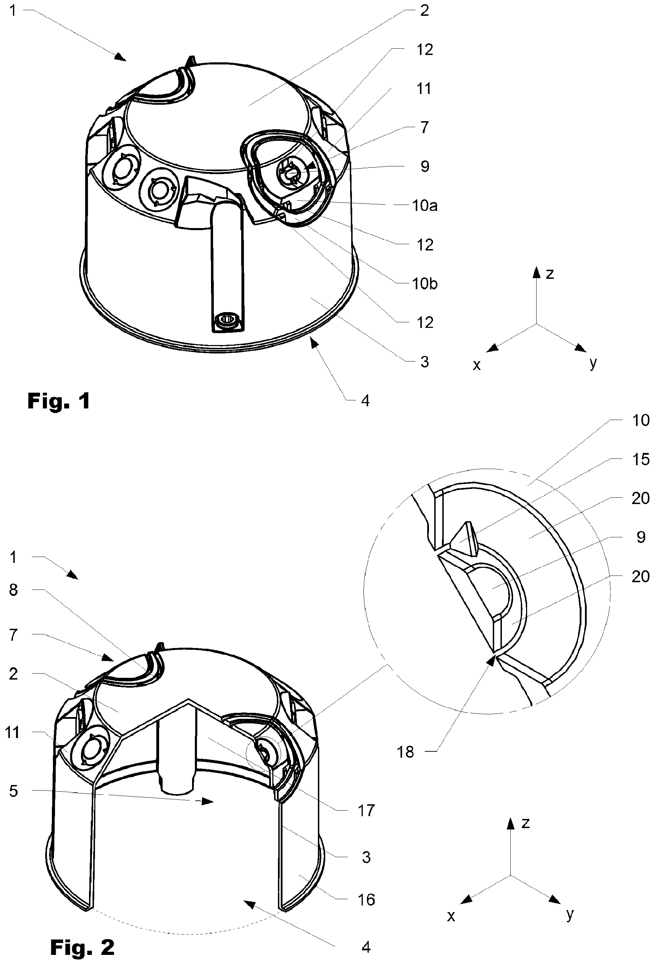

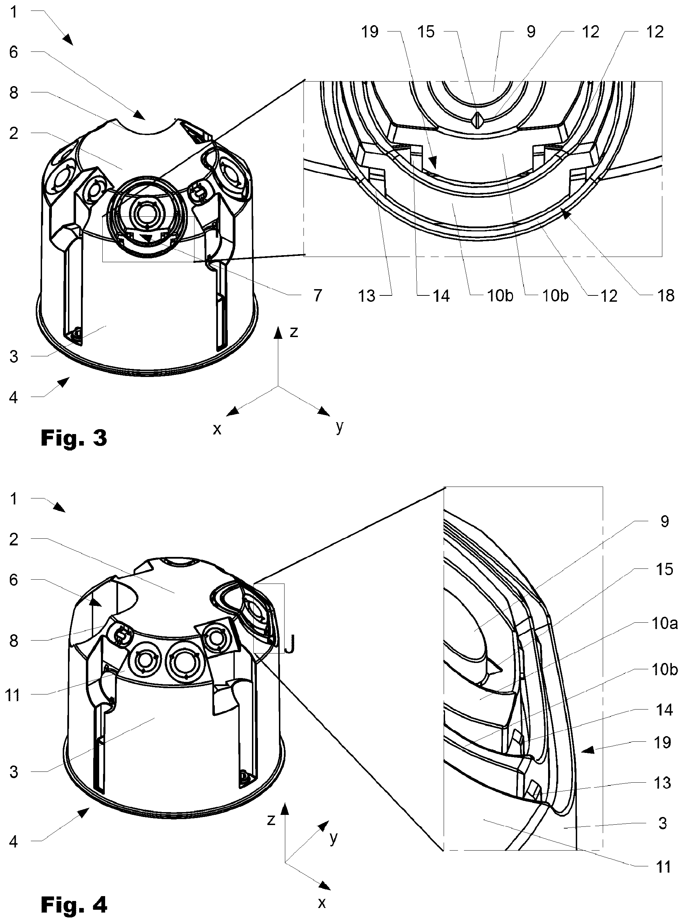

**Figur 1** bis **Figur 2** zeigen eine erste Variante einer erfindungsgemässen Installationsdose 1 und **Figur 3** bis **Figur 4** eine zweite Variante einer erfindungsgemässen Installationsdose 1 für elektrotechnische Zwecke. Die Installationsdose 1 umfasst einen Dosenboden 2 mit einer daran anschliessenden Dosenwand 3, welche einen Installationsraum 5 umgeben, der über eine dem Dosenboden 2 gegenüberliegende Installationsöffnung 4 zugänglich ist. Die Installationsdose 1 weist in den gezeigten Varianten weiter einen Übergangsbereich 11 auf, welcher zwischen dem Dosenboden 2 und der Dosenwand 3 ausgebildet ist.

Die Installationsdose 1 weist zwei einander diametral gegenüber angeordnete Einführöffnungen 6 zum Einführen von Elektrorohren und/oder Elektrokabeln in den Installationsraum 5 auf. Diese Einführöffnungen 6 erstrecken sich in den gezeigten Varianten über den Dosenboden 2, den Übergangsbereich 11 und die Dosenwand 3 (andere Ausgestaltungen sind jedoch ebenfalls möglich). Die Einführöffnung 6 ist vor der Installation durch einen heraustrennbaren Wandbereich 7 verschlossen. Der Wandbereich 7 ist gegenüber einem Rand 8 (vgl. **Figur 3** und **Figur 4****)** der Einführöffnung 6 zumindest bereichsweise durch einen Spalt 12 getrennt, welcher mindestens ein äusseres Sollbruchelement 13 umfasst. Der Wandbereich 7 ist in den gezeigten Varianten weiter in eine innere Sektion 9 und zwei äussere Sektionen 10a, 10b unterteilt. Eine zweite äussere Sektion 10b ist hierbei um eine erste äussere Sektion 10a herum angeordnet. Die Sektionen 9, 10a sind untereinander von einem Spalt 12 getrennt, welcher mindestens ein inneres Sollbruchbruchelement 15 umfasst, während zwischen den Sektionen 10a und 10b und in dem dazugehörigen Spalt 12 mindestens ein mittleres Sollbruchbruchelement 14 angeordnet ist. Während die innere Sektion 9 kreis oder oval förmig ausgestaltet ist, sind die äusseren Sektionen 10a und 10b O-förmig. Andere Ausgestaltungen sind jedoch ebenfalls möglich. Ein Spalt 12 kann so gestaltet sein, dass dieser an einer Innen-und/ oder einer Aussenseite 17, 16 der Installationsdose 1 entlang des Spaltes 12 zumindest eine abgeflachte Seitenfläche 20 aufweist. Je nach Grundform der Dose und Anordnung der Einführöffnung 6, bzw. des Wandbereiches 7 auf der Installationsdose 1 können die jeweiligen Spalte 12 um die innere und die mindestens eine äussere Sektion 9, 10 in zwei Raumrichtungen gekrümmt angeordnet sein. In den gezeigten Varianten trifft dies für die beiden Spalte 12, welche die erste und die zweite äussere Sektion 10a, 10b umgeben, zu. Der Spalt 12, welcher die innere Sektion 9 umgibt, liegt auf dem Übergangsbereich 11.

Entlang der Spalte 12 kann jeweils eine Öffnung in den Installationsraum 6 geschaffen werden, die an den Durchmesser eines einzuführenden Rohres oder Kabels anpassbar ist. Das Heraustrennen der weiter innen liegenden Sektionen benötigt hierbei weniger Kraft als das Heraustrennen der weiter aussen liegenden Sektionen (ausgehende von einem Zentrum der Einführöffnung 6).

In den dargestellten Varianten ist der die innere und/oder die äusseren Sektionen 9, 10 umgebene Spalt 12 zumindest bereichsweise als ein Durchbruch 18 von einer Doseninnenseite 17 zu einer Dosenaussenseite 16 ausgestaltet. Zwischen den Durchbrüchen 18 eines jeweiligen Spaltes 12 verbleiben die multiplen Sollbruchelemente 13, 14, 15 in Form von den Durchbrüchen 18 überbrückender Stege. Die Anzahl der jeweiligen Stege 13, 14, 15 in einem Spalt 12 kann hierbei von Spalt zu Spalt von innen nach aussen zunehmen. In den gezeigten Varianten ist die Anzahl der inneren Sollbruchelemente 15 des Spalts 12 um die innere Sektion 9 kleiner als die Anzahl von mittleren Sollbruchelementen 14 des Spalts 12 um die erste äussere Sektion 10a. Allerdings sind die äusseren Sollbruchelemente 13, welche die zweite äussere Sektion 10b umgeben, in der Anzahl geringer als die mittleren Sollbruchelemente 14, welche die erste äussere Sektion 10a umgeben. Dennoch wird eine grössere Kraft benötigt um die äussere Sektion 10b herauszutrennen, da die äusseren Sollbruchelemente 13, welche die zweite äussere Sektion 10b umgeben stärker dimensioniert sind als die mittleren Sollbruchelemente 14, welche die erste äussere Sektion 10a umgeben.

Wie in der **Figur 2** ersichtlich, ist die innere Sektion 9 bezogen auf die Aussenseite 16 der Installationsdose 1 versenkt angeordnet und besitzt unabhängig davon in Relation zu den beiden äusseren Sektionen 10a , 10b eine verhältnismässig kleine Fläche von A = 5 - 15% der gesamten Fläche der äusseren Sektionen 10a, 10b. Diese beiden Faktoren erleichtern weiter das Heraustrennen der inneren Sektion 9.

Die erste und die zweite Variante der erfindungsgemässen Installationsdose 1 können durch Spritzguss hergestellt werden. Hierzu können beide Varianten, wie folgt dargestellt, verschiedene vorteilhafte konstruktive Eigenschaften aufweisen. Wie in den Detailansichten von **Figur 3** und **Figur 4** ersichtlich, erstrecken sich die Durchbrüche 18 der jeweiligen Spalte 12 in eine Entformungsrichtung (negative z-Richtung) durch die Installationsdose 1. Weiterhin sind die erste und die zweite äussere Sektion 10a und 10b zumindest bereichsweise auf der Dosenwand 4 angeordnet und diese Bereiche 19 von den Durchbrüchen 18 getrennt und senkrecht zur Entformungsrichtung zum Installationsraum 6 hin gestaffelt angeordnet (vgl. **Figur 3**). Die Stege, bzw. Sollbruchelemente 13, 14, welche zwischen den gestaffelten Bereichen 19 angeordnet sind, erstrecken sich ebenfalls in die Entformungsrichtung.

Die gezeigte zweite Variante unterscheidet sich von der ersten Variante der Installationsdose 1 in einer anderen Grundform der Installationsdose 1 sowie in der Form und Ausgestaltung der inneren Sektion 9. Bei der ersten Variante hat die innere Sektion 9 eine längliche Form, welche zum Einführen eines Datenkabels gedacht ist während in der zweiten Variante die innere Sektion kreisförmig ausgestaltet ist. Grundsätzlich eignen sich jedoch beide Formen der ersten und zweiten Variante für das Einführen eines Werkzeuges wie beispielsweise eines Schraubendrehers. Das eingeführte Werkzeug kann dahingehend genutzt werden, dass die um die innere Sektion herumliegenden äusseren Sektionen durch entsprechendes Heraushebeln mit dem Werkzeug einfacher herausgetrennt werden können. Zum Hebeln wird das Werkzeug durch die von der inneren Sektion 9 freigegebenen Öffnung in den Installationsraum 5 gesteckt und das Werkzeug an einem Ende an der jeweiligen herauszutrennende Sektion 10a, 10b abgestützt.

**LISTE DER BEZUGSZEICHEN**

| | | | |
|---|---|---|---|
| 1 | Installationsdose | 13 | Äusseres Sollbruchele-ment (Steg) |
| 2 | Dosenboden | | |
| 3 | Dosenwand | 14 | Mittleres Sollbruchele-ment (Steg) |
| 4 | Installationsöffnung | | |
| 5 | Installationsraum | 15 | Inneres Sollbruchelement (Steg) |
| 6 | Einführöffnung | | |
| 7 | Wandbereich | 16 | Aussenseite (Dose) |
| 8 | Rand | 17 | Innenseite (Dose) |
| 9 | Innere Sektion | 18 | Durchbruch |
| 10 | Äussere Sektion | 19 | Gestaffelter Bereich |
| a. | Erste äussere Sektion | 20 | Abgeflachte Seitenfläche |
| b. | Zweite äussere Sektion | | |
| 11 | Übergangsbereich | | |
| 12 | Spalt | | |

## Patentansprüche

1. Installationsdose (1) für elektrotechnische Zwecke umfassend
a. einen Dosenboden (2) und eine daran anschliessende Dosenwand (3), welche einen Installationsraum (5) bilden, sowie
b. eine dem Dosenboden (2) gegenüberliegende und von der Dosenwand (3) umgebende Installationsöffnung (4),
c. wobei die Installationsdose (1) weiterhin mindestens eine Einführöffnung (6) aufweist, welche von einem heraustrennbaren Wandbereich (7) verschlossen ist, wobei
i. der Wandbereich (7) gegenüber einem Rand (8) der Einführöffnung (6) zumindest bereichsweise durch einen Spalt (12) getrennt ist, der mindestens ein Sollbruchelement (13) umfasst;
ii. wobei der Wandbereich (7) eine innere Sektion (9) und mindestens eine diese zumindest teilweise umgebende äussere Sektion (10) umfasst, welche zumindest bereichsweise von der inneren Sektion (9) durch einen Spalt (12) getrennt ist, der ebenfalls mindestens ein Sollbruchelement (14, 15) umfasst, so dass je nach Durchmesser eines einzuführenden Rohres, die innere Sektion (9) alleine oder in Kombination mit der mindestens einen äusseren Sektion (10) heraustrennbar ist.

2. Installationsdose (1) gemäss Patentanspruch 1, **dadurch gekennzeichnet, dass** die mindestens einen Sollbruchelemente (13, 14, 15), welche in Bezug auf ein Zentrum der Einführöffnung (6) in einem weiter innen liegenden Spalt (12) angeordnet sind, weniger stark dimensioniert sind.

3. Installationsdose (1) gemäss einem der vorangehenden Patentansprüche, **dadurch gekennzeichnet, dass** die mindestens eine äussere Sektion (10) aus mehreren äusseren Sektionen (10a, 10b) besteht.

4. Installationsdose (1) gemäss einem der vorangehenden Patentansprüche, **dadurch gekennzeichnet, dass** der die innere und/oder die äussere Sektion umgebene Spalt (12) zumindest bereichsweise als ein Durchbruch (18) von einer Doseninnenseite (17) zu einer Dosenaussenseite (16) ausgestaltet ist.

5. Installationsdose (1) gemäss Patentanspruch 4, **dadurch gekennzeichnet, dass** das mindestens eine Sollbruchelement (13, 14, 15) ein den Durchbruch (18) überbrückender Steg ist.

6. Installationsdose (1) gemäss Patentanspruch 5, **dadurch gekennzeichnet, dass** eine Anzahl der Stege (15) des Spalts (12) um die innere Sektion (9) kleiner ist als eine Anzahl von Stegen (13, 14) des Spalts (12) um die mindestens eine äussere Sektion (10).

7. Installationsdose (1) gemäss einem der vorangehenden Patentansprüche, **dadurch gekennzeichnet, dass** die innere Sektion (9) eine Fläche von A=5-15% der Fläche der mindestens einen äusseren Sektion (10) einnimmt.

8. Installationsdose (1) gemäss Patentanspruch 4, **dadurch gekennzeichnet, dass** die Durchbrüche (18) sich in eine Entformungsrichtung durch die Installationsdose (1) erstrecken.

9. Installationsdose (1) gemäss einem der vorangehenden Patentansprüchen, **dadurch gekennzeichnet, dass** mehrere Sollbruchelemente (13, 14, 15) um den jeweiligen Umfang des Spaltes (12) verteilt sind und die Sollbruchelemente (13, 14, 15) eines Spaltes (12) zu den Sollbruchelementen (13, 14, 15) eines anderen Spaltes (12) versetzt angeordnet sind.

10. Installationsdose (1) gemäss einem der vorangehenden Patenansprüchen, **dadurch gekennzeichnet, dass** die innere und die mindestens eine äussere Sektion (9, 10) O-förmig und/oder U-förmig ausgestaltet sind.

11. Installationsdose (1) gemäss einem der vorangehenden Patenansprüchen, **dadurch gekennzeichnet, dass** die jeweiligen Spalte (12) um die innere und die mindestens eine äussere Sektion (9, 10) in zwei Raumrichtungen gekrümmt angeordnet sind.

12. Installationsdose (1) gemäss einem der vorangehenden Patenansprüchen, **dadurch gekennzeichnet, dass** die innere Sektion (9) in einem herausgetrennten Zustand eine Eingriffskontur für ein Werkzeug freigibt, insbesondere die Klinge eines Schraubendrehers, zum Ausbrechen des Wandbereiches (7).

13. Installationsdose (1) gemäss einem der vorangehenden Patenansprüchen, **dadurch gekennzeichnet, dass** die Installationsdose (1) einen Übergangsbereich (11), insbesondere einen abgerundeten und/oder abgeflachten Übergangsbereich (11), zwischen dem Dosenboden (2) und/oder der Dosenwand (3) aufweist.

14. Installationsdose (1) gemäss einem der vorangehenden Patenansprüchen, **dadurch gekennzeichnet, dass** die Installationsdose (1) durch Spritzguss hergestellt ist.

15. Installationsdose (1) gemäss Patentanspruch 13, **dadurch gekennzeichnet, dass** die Installationsdose (1) im Bereich des Dosenbodens (2) und/oder der Dosenwand (3) und/oder dem Übergangsbereich (11) die mindestens eine Einführöffnung aufweist.

16. Installationsdose (1) gemäss einem der vorangehenden Patenansprüchen, **dadurch gekennzeichnet, dass** die Sollbruchelemente so ausgestaltet sind, dass bei einer Krafteinwirkung auf die innere Sektion die weiter innen liegenden Sollbruchelemente bevorzugter brechen als die weiter aussenliegenden Sollbruchelemente.
